# EUROPÄISCHE PATENTSCHRIFT

(11) **EP 1 722 912 B1**
(45) Veröffentlichungstag und Bekanntmachung des Hinweises auf die Patenterteilung: **19.09.2012**
(21) Anmeldenummer: 05706967.6
(22) Anmeldetag: 22.01.2005
(51) Int. Cl.: B23C 3/28

(54) **VERFAHREN ZUR HERSTELLUNG VON PROFILBAHNEN FÜR GELENKTEILE**
METHOD FOR THE PRODUCTION OF PROFILED STIPS FOR JOINT PARTS
PROCEDE POUR FABRIQUER DES GLISSIERES PROFILEES POUR ELEMENTS D' ARTICULATION

(30) Priorität: 18.02.2004 DE 102004008872
(43) Veröffentlichungstag der Anmeldung: 22.11.2006
(73) Patentinhaber: MAG IAS GmbH, 73033 Göppingen (DE); GKN Driveline International GmbH, 53797 Lohmar (DE)
(72) Erfinder: STANIK, Markus, 73095 Albershausen (DE); SCHNITZLER, Willi, 53844 Troisdorf (DE); ROTHENBUECHER, Udo, 63839 Kleinwallstadt (DE); RUNOW, Uwe, 63110 Rodgau (DE)
(74) Vertreter: Hoeger, Stellrecht & Partner Patentanwälte
(86) Internationale Anmeldenummer: PCT/EP2005/000624
(87) Internationale Veröffentlichungsnummer: WO 2005/089992

(56) Entgegenhaltungen:
- WO-A-92/14580
- WO-A-03/053617
- WO-A-2004/012888
- DE-U1- 8 126 582
- FR-A- 2 421 024
- US-A- 3 277 613
- US-A- 5 916 013

## Beschreibung

Die Erfindung betrifft ein Verfahren zur Herstellung von Profilbahnen für Gelenkteile, bei dem ein Schneidwerkzeug auf das Werkstück wirkt, wobei eine Werkstückbearbeitung mit dem Schneidwerkzeug beim relativen Vorwärtsverfahren zwischen Werkstück und Werkzeug und eine Werkstückbearbeitung mit dem gleichen Schneidwerkzeug beim sich an den Vorwärtsfahrvorgang anschließenden Rückwärtsfahren durchgeführt wird.

Eine Werkzeugmaschine, mittels welcher sich ein Verfahren zur Herstellung von Profilbahnen für Gelenkteile, bei dem ein Schneidwerkzeug auf das Werkstück wirkt, durchführen lässt, ist in der internationalen Anmeldung WO 2004/012888 A1 beschrieben.

Aus der WO 03/053617 A1 ist ein Verfahren gemäß dem Oberbegriff des Anspruchs 1 bekannt, bei dem zur Erzeugung von Kugellaufbahnen auf einer äußeren Umfangsfläche eines gelenkigen Teils für ein Gleichlaufdrehgelenk das Scheibenfräsen verwendet wird. Es wird ein Scheibenfräswerkzeug mit einer großen Zahl von Fräszähnen bezogen auf den Durchmesser des Werkzeugs angesetzt, um eine hohe Vorschubgeschwindigkeit zu erreichen.

Der Erfindung liegt dabei die Aufgabe zugrunde, ein Verfahren der eingangs genannten Art zu schaffen, bei welchem der Werkzeugeinsatz optimiert ist.

Diese Aufgabe wird bei dem Verfahren der eingangs genannten Art erfindungsgemäß dadurch gelöst, dass das Werkzeug beim Vorwärtsfahren einen anderen Anstellwinkel hat als beim Rückwärtsfahren.

Durch die erfindungsgemäße Lösung wird also mit dem gleichen Werkzeug beim Vorwärtsfahren und dem Rückwärtsfahren eine Schneidbearbeitung durchgeführt. Bei der Schneidbearbeitung kann es sich beispielsweise um eine Fräsbearbeitung, Drehbearbeitung oder Schleifbearbeitung handeln. Es lassen sich dadurch Bearbeitungszeiten minimieren. Insbesondere lässt sich mit dem gleichen Werkzeug eine Profilbahn mit einem Schruppschnitt und anschließendem Schlichtschnitt herstellen. Es muss kein externer Werkzeugwechsel (Austausch des Werkzeugs) oder interner Werkzeugwechsel (Positionierung des Werkstücks bezüglich einer weiteren Werkzeugspindel) durchgeführt werden.

Es müssen deshalb auch nicht mehr Werkzeugspindeln als Werkstückhalter vorgesehen werden.

Durch das erfindungsgemäße Verfahren lassen sich beispielsweise Kugellaufbahnen von Gelenkaußenteilen und Gelenkinnenteilen herstellen.

Das Werkzeug hat beim Vorwärtsfahren einen anderen Anstellwinkel als beim Rückwärtsfahren. Dadurch wirken unterschiedliche hauptsächliche Schneidwerkzeugbereiche auf das Werkstück. Dies bedeutet, dass beim Vorwärtsfahrvorgang und beim Rückwärtsfahrvorgang unterschiedliche Werkzeugbereiche unterschiedlich abgenutzt werden. Dadurch lässt sich das Schneidwerkzeug als Ganzes besser nutzen. Dies wiederum ermöglicht es, da unterschiedliche hauptsächliche Schneidenbereiche des Werkzeugs auf das zu bearbeitende Werkstück wirken, zuerst eine Grobbearbeitung durchzuführen und dann beim Rückwärtsfahren ein Feinbearbeitung durchzuführen; beim Rückwärtsverfahren wird dann ein anderer Schneidenbereich hauptsächlich genutzt, welcher eben durch den Vorwärtsfahrvorgang noch nicht abgenutzt ist. Durch die bessere Nutzung des Werkzeugs sind die Werkzeugkosten reduziert, da das Werkzeug weniger oft gewechselt werden muss. Dadurch wiederum sind die Maschinenkosten reduziert, da beispielsweise auch Werkzeugwechselzeiten reduziert sind. Da in einem Vorwärtsfahr-Rückwärtsfahr-Kombinationsprozeß eine Fertigbearbeitung des Werkstücks bezüglich beispielsweise einer Profilbahn durchführbar ist, ergibt sich wiederum eine minimierte Bearbeitungszeit.

Insbesondere muss für die Grobbearbeitung und die Feinbearbeitung kein Werkzeugwechsel durchgeführt werden (wie es der Fall ist, wenn unterschiedliche Werkzeuge für die Grobbearbeitung und die Feinbearbeitung verwendet werden).

Günstig ist es, wenn der Rückwärtsfahrvorgang nach Erreichen eines Endpunkts des Vorwärtsfahrvorgangs erfolgt. Dadurch lässt sich der Rückwärtsfahrvorgang an den Vorwärtsfahrvorgang anschließen.

Insbesondere werden (Schneid-)Werkzeug und Werkstück in einer ersten Richtung relativ zueinander geführt und in einer zweiten Richtung als Gegenrichtung relativ zueinander geführt. Durch die relative Führung zwischen Werkzeug und Werkstück lässt sich ein Vorwärtsfahrvorgang und ein Rückwärtsfahrvorgang realisieren.

Es ist grundsätzlich möglich, dass das Werkstück translatorisch festgehalten wird und das Werkzeug gegenüber dem Werkstück translatorisch verfahren wird, um einen Vorwärtsfahrvorgang und einen Rückwärtsfahrvorgang zu realisieren. Günstig ist es, wenn das Werkstück bezüglich eines Maschinengestells geführt wird. Es ist dann beispielsweise möglich, ein Werkstück einem Werkzeug zuzustellen, um eine Profilbahn einbringen zu können. Eine Werkzeugspindel muss dann während des Bearbeitungsvorgangs nicht verfahren werden.

Ganz besonders vorteilhaft ist es, wenn beim Vorwärtsfahrvorgang eine Grobbearbeitung erfolgt und beim Rückwärtsfahrvorgang eine Feinbearbeitung erfolgt. Es lässt sich dann in einem ersten Schritt mit verringerter Genauigkeit und verringerter Oberflächengüte eine "Vorbahn" herstellen, die sich dann bei der Feinbearbeitung fertigstellen lässt, d. h. in ihre Endform bringen lässt.

Es ist vorgesehen, dass ein Anstellwinkel des Werkzeugs beim Vorwärtsfahrvorgang festgehalten wird. Ferner ist es vorgesehen, dass ein Anstellwinkel des Werkzeugs beim Rückwärtsfahrvorgang festgehalten wird.

Es ist vorteilhaft, wenn bei oder nach Erreichen eines Endpunkts des Vorwärtsfahrvorgangs die Zustelltiefe des Schneidwerkzeugs geändert wird. Es lässt sich dann zwischen einem Grobbearbeitungsvorgang und einem Feinbearbeitungsvorgang (mit geringerer Zustelltiefe) umschalten.

Aus den oben genannten Gründen ist es besonders vorteilhaft, wenn die Anstellwinkeländerung so erfolgt, dass unterschiedliche hauptsächliche Schneidenbereiche des Werkzeugs beim Vorwärtsfahrvorgang und Rückwärtsfahrvorgang auf das Werkstück wirken. Dadurch lässt sich das Werkzeug effektiv nutzen.

Beispielsweise ist der Anstellwinkel bezogen auf eine Verschiebungsrichtung zwischen Werkzeug und Werkstück beim Vorwärtsfahrvorgang größer als beim Rückwärtsfahrvorgang. Der Unterschied kann in der Größenordnung von wenigen Grad liegen. Bei einer beispielhaften Ausführungsform beträgt der Anstellwinkel für die Vorwärtsbewegung 22,5° und beim Rückwärtsfahren 20°. Es sind auch andere Anstellwinkel möglich.

Auf einfache Weise läßt sich ein Anstellwinkel über Verschwenkung eines Werkzeughalters einstellen. Eine Änderung des Anstellwinkels läßt sich dann durch Änderung der Schwenkstellung des Werkzeughalters einstellen.

Ganz besonders vorteilhaft ist es, wenn gleichzeitig eine Mehrzahl von Werkstücken bearbeitet wird. Da bei der erfindungsgemäßen Lösung kein Werkzeugwechsel zwischen Grobbearbeitung und Feinbearbeitung notwendig ist (weder extern durch Werkzeugaustausch noch intern innerhalb einer Bearbeitungsmaschine über den Wechsel zu einer anderen Werkzeugspindel), lassen sich, wenn eine Mehrzahl von Werkstückhaltern und eine entsprechende Mehrzahl von Werkzeughaltern mit Werkzeugen vorgesehen ist, eben auch eine entsprechende Mehrzahl von Werkstücken synchron bearbeiten. Es läßt sich dadurch auch die Zahl der benötigten Werkzeugspindeln minimieren, da für ein Werkstück nur eine Werkzeugspindel vorgesehen werden muß. (Bei aus dem Stand der Technik bekannten Verfahren werden pro Werkstückhalter zwei Werkzeugspindeln jeweils für die Grobbearbeitung und die Feinbearbeitung benötigt.)

Insbesondere erfolgt die Durchführung des erfindungsgemäßen Verfahrens in einer Werkzeugmaschine.

Eine Werkzeugmaschine läßt sich vorteilhaft zur Durchführung des erfindungsgemäßen Verfahrens verwenden.

Insbesondere weist eine entsprechende Werkzeugmaschine einen schwenkbaren Werkzeughalter auf. Durch einen solchen schwenkbaren Werkzeughalter läßt sich ein Anstellwinkel des Werkzeugs an ein zu bearbeitendes Werkstück einstellen und auch verändern, um so unterschiedliche Werkzeugbereiche nutzen zu können.

Beispielsweise ist die Werkzeugmaschine eine Mehrspindel-Werkzeugmaschine.

Ganz besonders vorteilhaft ist es, wenn ein Werkzeughalter eine Mehrzahl von Werkzeugen entsprechend einer Anzahl von Werkstückhaltern aufweist. Es läßt sich dann gleichzeitig eine Mehrzahl von Werkstücken synchron bearbeiten, wobei bei dem Bearbeitungsvorgang mit Vorwärtsfahrvorgang und Rückwärtsfahrvorgang pro Werkstück bezogen auf die Herstellung von Profilbahnen eine Fertigherstellung erfolgen kann.

Die nachfolgende Beschreibung eines bevorzugten Ausführungsbeispiels dient im Zusammenhang mit der Zeichnung der näheren Erläuterung der Erfindung. Es zeigen:
- Figur 1: eine schematische Seitenschnittansicht eines Beispiels einer Werkzeugmaschine, mit welcher das erfindungsgemäße Verfahren durchführbar ist;
- Figur 2: ein Beispiel eines Werkstücks (Verschiebegelenk) mit einer Kugelbahn;
- Figur 3: eine schematische Teilansicht von zwei Teilschritten beim Vorwärtsfahren zwischen Werkstück und Schneidwerkzeug und
- Figur 4: eine schematische Darstellung von zwei Teilschritten beim Rückwärtsfahren zwischen Werkstück und Werkzeug.

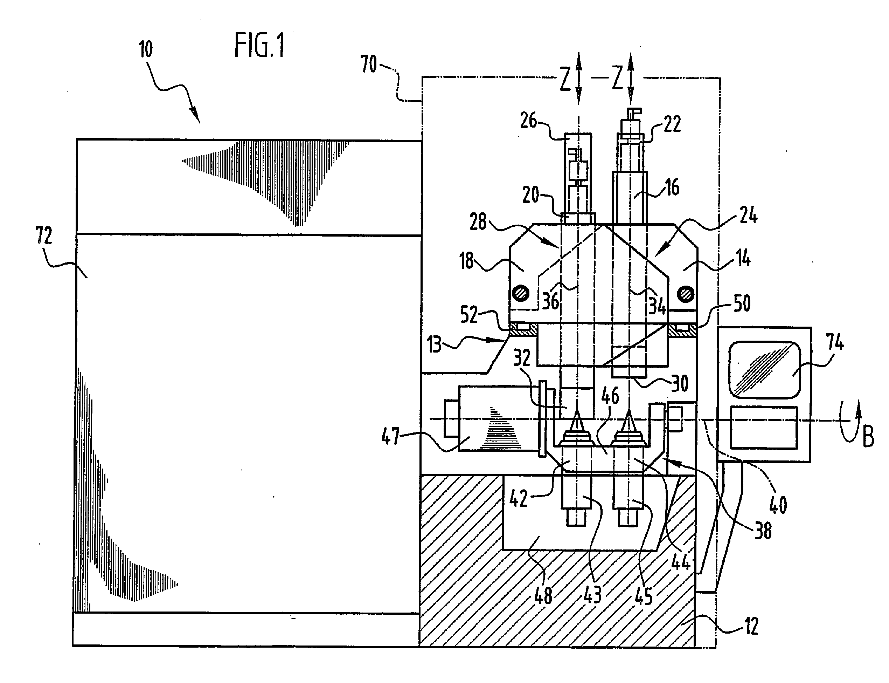

Ein Ausführungsbeispiel einer Mehrspindel-Werkzeugmaschine, mittels welcher das erfindungsgemäße Verfahren durchführbar ist, ist in Figur 1 als Ganzes mit 10 bezeichnet ist; sie umfaßt ein Maschinengestell 12, über welches die Mehrspindel-Werkzeugmaschine 10 (hier gezeigt als Zweispindler) ausgerichtet auf einer Unterlage positionierbar ist. An dem Maschinengestell 12 ist auf einem Aufsatzständer 13 ein erster Spindelschlitten 14 in einer Richtung X linearverschieblich geführt. Diese Richtung X ist insbesondere eine horizontale Richtung. Der erste Spindelschlitten 14 trägt eine erste Werkstückspindel 16, an welcher ein zu bearbeitendes Werkstück drehbar fixierbar ist. Die erste Werkstückspindel 16 ist an dem ersten Spindelschlitten 14 in einer Querrichtung Z zur Richtung X verschieblich geführt, so daß der Abstand eines an der ersten Werkstückspindel 16 gehaltenen Werkstücks relativ zum Maschinengestell 12 einstellbar ist. Eine Drehachse der ersten Werkstückspindel 16, um die ein gehaltenes Werkstück drehbar ist, ist parallel zu der Z-Richtung.

Weiterhin ist ein zweiter Spindelschlitten 18 vorgesehen, welcher ebenfalls in der X-Richtung linearverschieblich am Maschinengestell 12 geführt ist. Dieser zweite Spindelschlitten 18 hält eine zweite Werkstückspindel 20, die in der Z-Richtung linearverschieblich an dem zweiten Spindelschlitten 18 gehalten ist.

Die beiden Werkstückspindeln 16 und 20 sind insbesondere im wesentlichen parallel zueinander ausgerichtet.

Zum Antrieb der ersten Werkstückspindel 16 in ihrer Verschiebungsbewegung längs der Z-Achse ist ein erster Antrieb 22 vorgesehen. Es kann sich dabei beispielsweise um einen hydraulischen Antrieb, einen Kugelgewindetrieb oder einen Linearmotor handeln. Eine Antriebseinheit des ersten Antriebs 22 sitzt an dem ersten Spindelschlitten 14 und ist mit diesem in X-Richtung mitbewegt.

Zur Führung der ersten Werkstückspindel 16 weist der erste Spindelschlitten 14 eine als Ganzes mit 24 bezeichnete Führungsvorrichtung auf, an welcher die erste Werkstückspindel 16 durch den ersten Antrieb 22 angetrieben in Z-Richtung verschiebbar ist. Die Z-Richtung ist dabei insbesondere vertikal ausgerichtet, das heißt parallel zur Schwerkraftrichtung.

Zur Bewegung der zweiten Werkstückspindel 20 relativ zum zweiten Spindelschlitten 18 ist ein zweiter Antrieb 26 vorgesehen, welcher die Linearverschiebung der zweiten Werkstückspindel 20 an einer Führungsvorrichtung 28 in Z-Richtung relativ zum zweiten Spindelschlitten 18 antreibt.

An ihren unteren Enden sind die Werkstückspindeln 16 und 20 jeweils mit einem Werkstückhalter 30, 32 versehen, an welchem die jeweiligen Werkstücke um Längsachsen 34, 36 der jeweiligen Werkstückspindeln 16, 20 rotierbar fixierbar sind.

An dem Maschinengestell 12 ist eine Werkzeugaufnahmevorrichtung 38 schwenkbar um eine Achse B angeordnet, wobei diese Schwenkachse 40 quer zur Z-Richtung und X-Richtung orientiert ist und insbesondere horizontal ausgerichtet ist. Die Werkzeugaufnahmevorrichtung 38 umfaßt bei einer Zweispindel-Werkzeugmaschine eine erste Werkzeugaufnahme 42 und eine zweite Werkzeugaufnahme 44, welche beabstandet zueinander sind. Die Werkzeugaufnahmen 42, 44 sitzen an rotierbar angetriebenen Werkzeugspindeln 43, 45, so daß die entsprechend gehaltenen Werkzeuge wie Fräswerkzeuge oder Bohrwerkzeuge um eine Spindelachse rotierbar sind. Es lassen sich dann gleichzeitig mittels jeweiliger Werkzeuge zwei Werkstücke bearbeiten, wobei ein erstes Werkstück an der ersten Werkstückspindel 16 gehalten ist und ein zweites Werkstück an der zweiten Werkstückspindel 20 gehalten ist.

Die beiden Werkzeugaufnahmen 42 und 44 sitzen an einer jochförmigen Schwinge 46, welche um die Schwenkachse 40 (B-Achse) schwenkbar ist. Zur Durchführung der Schwenkbewegung ist ein Antrieb 47 vorgesehen. Innerhalb eines bestimmten Schwenkbereichs ist dabei jede Schwenkstellung der Werkzeugaufnahmevorrichtung 38 einstellbar, so daß bei einer bestimmten eingestellten Schwenkstellung die jeweiligen an den Werkstückspindeln 16 und 20 gehaltenen Werkstücke über die an der Werkzeugaufnahmevorrichtung 38 fixierten und insbesondere in den Werkzeugaufnahmen 42, 44 vorhandenen Werkzeuge bearbeitbar sind. Beispielsweise läßt sich so ein Gleichlaufgelenk (Figur) herstellen, welches Kugellaufbahnen in einem Achszapfen und in einer Nabe aufweist.

Insbesondere ist es möglich, über entsprechende Werkzeuge eine Weichfräsbearbeitung, Schleifbearbeitung oder Hartfräsbearbeitung durchzuführen. Es ist auch möglich, eine Hartdrehbearbeitung durchzuführen.

Dazu sind entsprechende Zusatzeinrichtungen wie beispielsweise eine oder mehrere Drehkonsolen mit entsprechendem Drehstahl oder zusätzlicher Spindel vorgesehen, welche im Bereich der Bearbeitungszone der Werkstücke angeordnet sind (in der Zeichnung nicht gezeigt).

Es ist auch möglich, eine Folgebearbeitung eines Werkstücks durchzuführen, indem dieses beispielsweise zuerst an der ersten Werkstückspindel 16 gehalten mit einem ersten Werkzeug bearbeitet wird und anschließend an die Werkstückspindel 20 übergeben und dann mit einem zweiten Werkzeug bearbeitet wird.

An dem Maschinengestell 12 ist ein Schwenkraum 48 gebildet, damit die Werkzeugaufnahmevorrichtung 38 in einem bestimmten Schwenkbereich ungehindert an dem Maschinengestell 12 schwenkbar ist. Durch diesen Schwenkraum 48 lassen sich auch Späne und dergleichen abführen.

Die Spindelschlitten 14 und 18 sind bezogen auf die Z-Richtung oberhalb der Werkzeugaufnahmevorrichtung 38 in der X-Richtung verschieblich geführt. Dazu ist eine erste Führung 50 vorgesehen, welche insbesondere eine Führungsschiene umfasst, welche in einem Abstand zu der Werkzeugaufnahmevorrichtung 38 oberhalb dieser angeordnet ist. Ferner ist eine zweite Führung 52 vorgesehen, welche parallel beabstandet zu der ersten Führung 50 insbesondere auf der gleichen Höhe in Z-Richtung über der Werkzeugaufnahmevorrichtung 38 angeordnet ist wie die erste Führung 50. Die zweite Führung 52 umfaßt insbesondere wiederum eine Führungsschiene. Die beiden Führungen 50 und 52 sind insbesondere horizontal angeordnet. Die Führungen 50, 52 sitzen an dem Aufsatzständer 13:

Es kann auch vorgesehen sein, daß die Führungen 50, 52 in Z-Richtung versetzt angeordnet sind, um so beispielsweise einen Spindelschlitten in seiner Höhenrichtung zusätzlich versteifen zu können, wenn dies notwendig ist.

Der erste Spindelschlitten 14 ist in seinem den Führungen 50, 52 zugewandten Bereich derart L-förmig oder dreieckförmig ausgebildet, daß er einen ersten Schenkel umfaßt, welcher längs der ersten Führung 50 orientiert ist und auf dieser geführt ist. Beispielsweise sind zwei beabstandete Führungsschuhe vorgesehen, um den ersten Schenkel auf der ersten Führung 50 linearverschieblich zu führen. Mit dem ersten Schenkel ist ein zweiter Schenkel verbunden, welcher quer zu dem ersten Schenkel orientiert ist und welcher an die zweite Führung 52 gekoppelt ist, beispielsweise mittels eines Führungsschuhs, um den zweiten Schenkel linearverschieblich auf der zweiten Führung 52 zu führen.

Zwischen den beiden Schenkeln sitzt an diesen die erste Werkstückspindel 16 zwischen den beiden Führungen 50 und 52.

Die Kontaktfläche des ersten Spindelschlittens 14 mit der ersten Führung 50 zur linearverschieblichen Kopplung an diese ist größer als die Kontaktfläche zur Kopplung an die zweite Führung 52. Beispielsweise ist die erste Kontaktfläche über die zwei Führungsschuhe gebildet, während sie für die zweite Führung 52 nur über den einen Führungsschuh gebildet ist.

Der zweite Spindelschlitten 18 umfaßt ebenfalls einen ersten Schenkel, welcher längs der zweiten Führung 52 orientiert ist und beispielsweise an diese über zwei Führungsschuhe gekoppelt ist. Quer zu diesem ersten Schenkel sitzt ein zweiter Schenkel, welcher an die erste Führung 50 über einen Führungsschuh gekoppelt ist. Damit hat auch der zweite Spindelschlitten 18 eine L-förmige oder dreieckförmige Außengestalt, wobei die Kontaktfläche mit der zweiten Führung 52 größer ist als mit der ersten Führung 50. Die zweite Werkstückspindel 20 sitzt zwischen dem ersten Schenkel und dem zweiten Schenkel an diesen zwischen den beiden Führungen 50 und 52 und ist der anderen Werkstückspindel 16 zugewandt mit einem freien Zwischenbereich zwischen den beiden Werkstückspindeln 16, 20.

Die L-förmige oder dreieckförmige Gestalt bezieht sich dabei auf einen Querschnitt in einer Projektion auf die durch die beiden Führungen 50, 52 aufgespannte Ebene mindestens im Bereich der Ankopplung der Spindelschlitten 14 bzw. 18 an diese Führungen 50 und 52.

Eine solche Mehrspindel-Werkzeugmaschine ist in der internationalen Anmeldung WO 2004/012888 A1 beschrieben. Auf diese Anmeldung wird ausdrücklich Bezug genommen.

Das erfindungsgemäße Verfahren, welches unten noch näher beschrieben wird, läßt sich aber auch mittels anders ausgebildeten Werkzeugmaschinen durchführen.

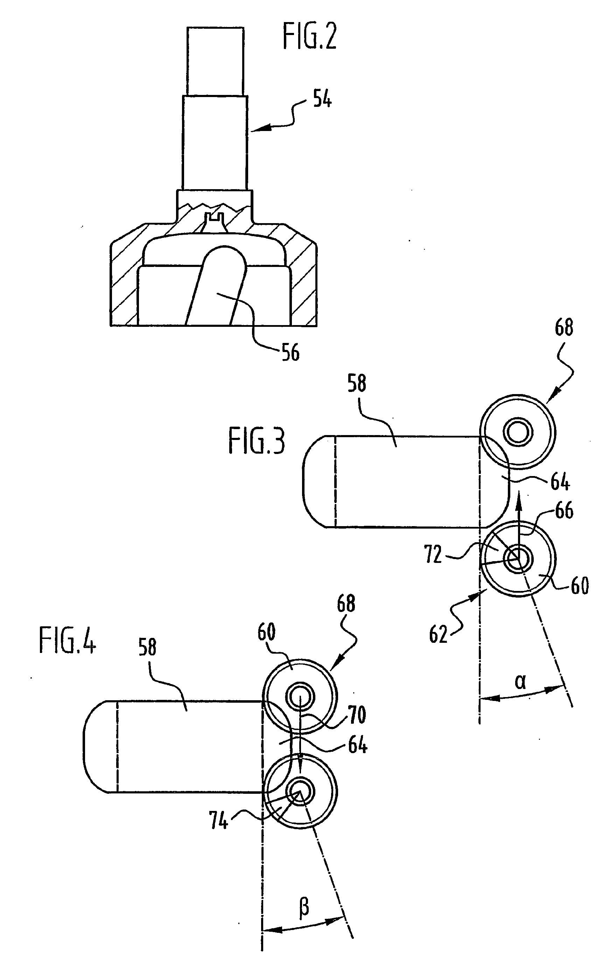

In Figur 2 ist beispielhaft ein gemäß dem erfindungsgemäßen Verfahren bearbeitetes Werkstück 54 gezeigt. Es handelt sich dabei um ein Gelenk mit einer Mehrzahl von gefrästen Kugellaufbahnen 56. Eine solche Kugellaufbahn 56 bildet eine Führungsbahn für eine Lagerkugel. Dargestellt ist dabei ein Gelenkaußenteil. Das erfindungsgemäße Verfahren kann auch für Gelenkinnenteile (Naben) eingesetzt werden. Es lassen sich gerade oder schräge Bahnen herstellen.

Das erfindungsgemäße Verfahren funktioniert wie folgt, wobei es beispielhaft anhand der Figuren 3 und 4 erläutert wird:

Ein Werkstück 58 und ein Fräswerkzeug 60 als Beispiel eines Schneidwerkzeugs werden relativ zueinander verfahren. In Figur 3 ist eine Stellung 62 des Fräswerkzeugs 60 gezeigt, bei der dieses beginnt, auf das Werkstück 58 zum (Profil-)Fräsen einer Profilbahn (Kugellaufbahn) 64 zu wirken. Das Fräswerkzeug 60 ist bei der beispielhaften Werkzeugmaschine 10 an einer Werkzeugspindel 43 gehalten. Das Werkstück 58 ist an dem Werkstückhalter 32 gehalten. Es erfolgt dann eine relative Vorwärtsbewegung zwischen dem Fräswerkzeug 60 und dem Werkstück 58. Diese Vorwärtsbewegung ist durch den Pfeil mit dem Bezugszeichen 66 angedeutet.

Bei der Werkzeugmaschine 10 wird diese Vorwärtsbewegung 66 durch eine Bewegung des Werkstückhalters 32 in der Richtung Z auf das Fräswerkzeug 60 zu realisiert.

Die Werkzeugaufnahme 42 liegt in einer bestimmten Schwenkstellung bezogen auf die Achse B. Dadurch ist ein Anstellwinkel α des Fräswerkzeugs 60 an das Werkstück 58 definiert. Während der Vorwärtsbewegung zwischen Werkstück 58 und Fräswerkzeug 60 wird dieser Anstellwinkel festgehalten.

Durch die relative Lage des Schlittens 18 zu dem Fräswerkzeug 60 wird eine Zustelltiefe für das Fräswerkzeug 60 eingestellt.

Die Vorwärtsbewegung 66 erfolgt, bis ein Endpunkt der Vorwärtsbewegung erreicht ist. Es ist dann eine Umkehrstellung 68 erreicht. Die Umkehrstellung 68 ist bei dem Beispiel der Werkzeugmaschine 10 ein Umkehrpunkt für die Bewegung des Werkzeughalters 32 in der Richtung Z.

Bei der Vorwärtsbewegung 66 wird eine Fräsgrobbearbeitung durchgeführt. Beispielsweise wird ein Schnitt einer Schnittiefe von 6 bis 7 mm eingebracht, wenn die Kugellaufbahn eines Gelenks gefräst wird. Insbesondere handelt es sich um einen Schruppschnitt.

Bei oder nach Erreichen der Umkehrstellung 68 wird der Anstellwinkel des Fräswerkzeugs 60 geändert (Figur 4). Dies wird dadurch erreicht, daß die Schwenkstellung des Werkzeughalters 42 geändert wird. Der neue Anstellwinkel β unterscheidet sich von dem Anstellwinkel α für die Vorwärtsbewegung 66. Bei dem gezeigten Beispiel ist dieser geänderte Anstellwinkel β kleiner als der Anstellwinkel α. Ausgehend von der Umkehrstellung 68 erfolgt dann bei geändertem Anstellwinkel β eine Rückwärtsbewegung 70 in Gegenrichtung zu der Vorwärtsbewegung 66.

Bei der beispielhaften Werkzeugmaschine gemäß Figur 1 erfolgt eine Bewegung der Werkstückaufnahme 32 in Z-Richtung nach oben, um die Rückwärtsbewegung 70 zu realisieren. Dadurch fährt das Fräswerkzeug 60 in der bei der Vorwärtsbewegung 66 hergestellten Profilbahn. Bei der Rückwärtsbewegung ist insbesondere auch die Zustelltiefe geändert, um eine Fräsfeinbearbeitung durchführen zu können. Insbesondere erfolgt eine Schneidtiefe im Zehntel-Millimeter-Bereich, um eine hohe Genauigkeit und eine hohe Oberflächengüte zu erreichen.

Durch die Änderung des Anstellwinkels nach dem Vorwärtsfahrvorgang wirkt ein anderer (hauptsächlicher) Schneidenbereich des Fräswerkzeugs auf das Werkstück 58. In Figur 3 ist beispielhaft ein wirksamer Schneidenbereich mit dem Bezugszeichen 72 gezeigt. Nach Änderung des Anstellwinkels liegt ein wirksamer Schneidenbereich 74 vor (Figur 4), welcher sich von dem Schneidenbereich 72 unterscheidet. Dies hat zur Folge, daß durch die Vorwärtsbewegung und die Rückwärtsbewegung zur Erzeugung der Profilbahn 64 das Fräswerkzeug 60 besser genutzt wird, da die Abnutzung gleichmäßiger ist; dies ist darauf zurückzuführen, daß unterschiedliche Bereiche des Fräswerkzeugs 60 hauptsächlich auf das Werkstück 58 wirken, wenn eine Vorwärtsbewegung 66 und eine Rückwärtsbewegung 70 vorliegt.

Durch die erfindungsgemäße Lösung wird die Wirtschaftlichkeit erhöht, da aufgrund der besseren Nutzung des Fräswerkzeugs 60 die Werkzeugkosten erniedrigt sind. Die Bearbeitung läßt sich auch schneller durchführen, da durch den Vorwärtsfahrvorgang und Rückwärtsfahrvorgang bei einer Auf- und Abbewegung des Werkstückhalters 32 sich die Profilbahn 64 einschließlich Feinfräsung herstellen lässt. Es muss zur Fräsgrobbearbeitung und Fräsfeinbearbeitung nicht das Fräswerkzeug gewechselt werden (indem beispielsweise das Werkstück nach der Fräsgrobbearbeitung auf ein weiteres Werkzeug zugestellt wird).

Durch die Änderung des Anstellwinkels zwischen der Vorwärtsbewegung 66 und der Rückwärtsbewegung 70 werden unterschiedliche Werkzeugbereiche genutzt, so dass wiederum mit dem gleichen Werkzeug eine Grobbearbeitung und eine Feinbearbeitung durchführbar ist.

Das erfindungsgemäße Verfahren lässt sich auch für andere Profilherstellungsverfahren wie Drehen und Schleifen verwenden.

Das erfindungsgemäße Verfahren lässt sich insbesondere einsetzen im Zusammenhang mit Mehrspindel-Werkzeugmaschinen, wobei gleichzeitig eine Mehrzahl von Werkstücken bearbeitbar ist, da pro Werkstück für die Nabenherstellung kein Werkzeugwechsel notwendig ist, da eben das gleiche Werkzeug 60 sowohl für die Grobbearbeitung als auch für die Feinbearbeitung verwendbar ist.

Das erfindungsgemäße Verfahren wurde oben im Zusammenhang mit der Werkzeugmaschine 10 beschrieben. Es ist auch grundsätzlich möglich, das erfindungsgemäße Verfahren auf anderen Werkzeugmaschinen einzusetzen. Beispielsweise lässt sich das erfindungsgemäße Verfahren auch bei einer Werkzeugmaschine einsetzen, welche nur einen Werkstückhalter aufweist. Das erfindungsgemäße Verfahren lässt sich auch einsetzen, wenn nicht ein Werkstückhalter relativ zu einem Maschinengestell verschoben wird, sondern ein Fräswerkzeughalter verschieblich an dem Maschinengestell geführt ist. Der Anstellwinkel eines Fräswerkzeugs an ein Werkstück läßt sich auch dadurch einstellen, daß ein Werkstückhalter gegenüber einem Maschinengestell verschwenkt wird.

## Patentansprüche

1. Verfahren zur Herstellung von Profilbahnen für Gelenkteile, bei dem ein Schneidwerkzeug auf das Werkstück wirkt, wobei eine Werkstückbearbeitung mit dem Schneidwerkzeug beim relativen Vorwärtsverfahren zwischen Werkstück und Werkzeug und eine Werkstückbearbeitung mit dem gleichen Schneidwerkzeug beim sich an den Vorwärtsfahrvorgang anschließenden Rückwärtsfahren durchgeführt wird, **dadurch gekennzeichnet, dass** das Werkzeug beim Vorwärtsfahren einen anderen Anstellwinkel hat als beim Rückwärtsfahren.

2. Verfahren nach Anspruch 1, **dadurch gekennzeichnet, dass** der Rückwärtsfahrvorgang nach Erreichen eines Endpunkts des Vorwärtsfahrvorgangs erfolgt.

3. Verfahren nach Anspruch 1 oder 2, **dadurch gekennzeichnet, dass** Werkzeug und Werkstück in einer ersten Richtung relativ zueinander geführt werden und in einer zweiten Richtung als Gegenrichtung relativ zueinander geführt werden.

4. Verfahren nach einem der vorangehenden Ansprüche, **dadurch gekennzeichnet, dass** das Werkstück bezüglich eines Maschinengestells verschieblich geführt wird.

5. Verfahren nach einem der vorangehenden Ansprüche, **dadurch gekennzeichnet, dass** beim Vorwärtsfahrvorgang eine Grobbearbeitung erfolgt.

6. Verfahren nach einem der vorangehenden Ansprüche, **dadurch gekennzeichnet, dass** beim Rückwärtsfahrvorgang eine Feinbearbeitung erfolgt.

7. Verfahren nach einem der vorangehenden Ansprüche, **dadurch gekennzeichnet, dass** ein Anstellwinkel des Werkzeugs beim Vorwärtsfahrvorgang festgehalten wird.

8. Verfahren nach einem der vorangehenden Ansprüche, **dadurch gekennzeichnet, dass** ein Anstellwinkel des Werkzeugs beim Rückwärtsfahrvorgang festgehalten wird.

9. Verfahren nach einem der vorangehenden Ansprüche, **dadurch gekennzeichnet, dass** bei oder nach Erreichen eines Endpunkts des Vorwärtsfahrvorgangs der Anstellwinkel des Werkzeugs geändert wird.

10. Verfahren nach einem der vorangehenden Ansprüche, **dadurch gekennzeichnet, dass** bei oder nach Erreichen eines Endpunkts des Vorwärtsfahrvorgangs die Zustelltiefe des Werkzeugs geändert wird.

11. Verfahren nach einem der vorangehenden Ansprüche, **dadurch gekennzeichnet, dass** die Anstellwinkeländerung so erfolgt, dass unterschiedliche Schneidenbereiche des Werkzeugs beim Vorwärtsfahrvorgang und Rückwärtsfahrvorgang hauptsächlich auf das Werkstück wirken.

12. Verfahren nach einem der vorangehenden Ansprüche, **dadurch gekennzeichnet, dass** der Anstellwinkel bezogen auf eine Verschiebungsrichtung zwischen Werkzeug und Werkstück beim Vorwärtsfahrvorgang größer ist als beim Rückwärtsfahrvorgang.

13. Verfahren nach einem der vorangehenden Ansprüche, **dadurch gekennzeichnet, dass** zur Einstellung des Anstellwinkels ein Werkzeughalter verschwenkt wird.

14. Verfahren nach einem der vorangehenden Ansprüche, **dadurch gekennzeichnet, dass** gleichzeitig eine Mehrzahl von Werkstücken bearbeitet wird.

15. Verfahren nach einem der vorangehenden Ansprüche, **gekennzeichnet durch** die Durchführung in einer Werkzeugmaschine.

16. Verwendung einer Werkzeugmaschine zur Durchführung des Verfahrens gemäß einem der vorangehenden Ansprüche.

17. Verwendung einer Werkzeugmaschine nach Anspruch 16, **dadurch gekennzeichnet, dass** die Werkzeugmaschine einen schwenkbaren Werkzeughalter aufweist.

18. Verwendung einer Werkzeugmaschine nach Anspruch 16 oder 17, **dadurch gekennzeichnet, dass** die Werkzeugmaschine eine Mehrspindel-Werkzeugmaschine ist.

19. Verwendung einer Werkzeugmaschine nach einem der Ansprüche 16 bis 18, **dadurch gekennzeichnet, dass** ein Werkzeughalter eine Mehrzahl von Werkzeugen entsprechend einer Anzahl von Werkstückhaltern aufweist.

## Claims

1. Process for producing profiled tracks for joint parts in which a cutting tool acts on the workpiece, wherein the workpiece is machined with the cutting tool during the relative forward movement between workpiece and tool and wherein the workpiece is machined with the same cutting tool during the return movement following the forward movement, **characterized in that** the tool has a different setting angle during the forward movement than during the return movement.

2. Process in accordance with claim 1, **characterized in that** the return movement takes place after an end point of the forward movement has been reached.

3. Process in accordance with claim 1 or 2, **characterized in that** the tool and the workpiece are guided relative to one another in a first direction and are guided relative to one another in a second direction as a counter direction.

4. Process in accordance with any one of the preceding claims, **characterized in that** the workpiece is guided so as to be displaceable relative to a machine frame.

5. Process in accordance with any one of the preceding claims, **characterized in that** a rough machining operation is performed during the forward movement.

6. Process in accordance with any one of the preceding claims, **characterized in that** a finish machining operation is performed during the return movement.

7. Process in accordance with any one of the preceding claims, **characterized in that** a setting angle of the tool is observed during the forward movement.

8. Process in accordance with any one of the preceding claims, **characterized in that** a setting angle of the tool is observed during the return movement.

9. Process in accordance with any one of the preceding claims, **characterized in that** the setting angle of the tool is changed when reaching, or after having reached, an end point of the forward movement.

10. Process in accordance with any one of the preceding claims, **characterized in that** the depth of feed of the tool is changed when reaching, or after having reached, an end point of the forward movement.

11. Process in accordance with any one of the preceding claims, **characterized in that** the change in the setting angle is effected in such a way that different cutting edge regions of the tool act mainly on the workpiece during the forward movement and the return movement.

12. Process in accordance with any one of the preceding claims, **characterized in that** the setting angle with reference to a direction of displacement between tool and workpiece is greater during the forward movement than during the return movement.

13. Process in accordance with any one of the preceding claims, **characterized in that** a tool holding device is pivoted in order to adjust the setting angle.

14. Process in accordance with any one of the preceding claims, **characterized in that** a plurality of workpieces are machined simultaneously.

15. Process in accordance with any one of the preceding claims, **characterized in that** the process is carried out on a machine tool.

16. Use of a machine tool for carrying out the method in accordance with any one of the preceding claims.

17. Use of a machine tool in accordance with claim 16, **characterized in that** the machine tool comprises a pivotable tool holding device.

18. Use of a machine tool in accordance with claim 16 or 17, **characterized in that** the machine tool is a multi-spindle machine tool.

19. Use of a machine tool in accordance with any one of claims 16 to 18, **characterized in that** a tool holding device comprises a plurality of tools corresponding to a number of workpiece holding devices.

## Revendications

1. Procédé de fabrication de glissières profilées pour des pièces articulées, où un outil de coupe agit sur la pièce, un usinage de pièce étant exécuté avec l'outil de coupe lors d'un mouvement d'avance relative entre la pièce et l'outil, et un usinage de pièce avec le même outil de coupe lors d'un mouvement de recul consécutif au mouvement d'avance, **caractérisé en ce que** lors du mouvement d'avance, l'outil présente un angle d'attaque différent de celui lors du mouvement de recul.

2. Procédé selon la revendication 1, **caractérisé en ce que** le mouvement de recul est exécuté après avoir atteint un point final du mouvement d'avance.

3. Procédé selon la revendication 1 ou la revendication 2, **caractérisé en ce que** l'outil et la pièce sont guidés l'un par rapport à l'autre dans une première direction et guidés l'un par rapport à l'autre dans une deuxième direction en tant que direction opposée.

4. Procédé selon l'une des revendications précédentes, **caractérisé en ce que** la pièce est guidée de manière à être déplacée par rapport à un bâti de machine.

5. Procédé selon l'une des revendications précédentes, **caractérisé en ce qu'**un usinage grossier est exécuté lors du mouvement d'avance.

6. Procédé selon l'une des revendications précédentes, **caractérisé en ce qu'**un usinage de précision est exécuté lors du mouvement de recul.

7. Procédé selon l'une des revendications précédentes, **caractérisé en ce qu'**un angle d'attaque de l'outil est maintenu lors du mouvement d'avance.

8. Procédé selon l'une des revendications précédentes, **caractérisé en ce qu'**un angle d'attaque de l'outil est maintenu lors du mouvement de recul.

9. Procédé selon l'une des revendications précédentes, **caractérisé en ce que**, lors du mouvement d'avance, l'outil présente un autre angle d'attaque que lors du mouvement de recul.

10. Procédé selon l'une des revendications précédentes, **caractérisé en ce que** l'angle d'attaque de l'outil est modifié lorsqu'est atteint, ou après avoir atteint un point final du mouvement d'avance.

11. Procédé selon l'une des revendications précédentes, **caractérisé en ce que** la profondeur d'avance de l'outil est modifiée lorsqu'est atteint, ou après avoir atteint un point final du mouvement de recul.

12. Procédé selon l'une des revendications précédentes, **caractérisé en ce que** la modification de l'angle d'attaque est effectuée de telle manière que des zones de coupe différentes de l'outil agissent principalement sur la pièce lors du mouvement d'avance et du mouvement de recul.

13. Procédé selon l'une des revendications précédentes, **caractérisé en ce que** l'angle d'attaque est supérieur lors du mouvement d'avance à l'angle d'attaque lors du mouvement de recul par rapport à une direction de déplacement entre l'outil et la pièce.

14. Procédé selon l'une des revendications précédentes, **caractérisé en ce qu'**un support d'outil est pivoté pour le réglage de l'angle d'attaque.

15. Procédé selon l'une des revendications précédentes, **caractérisé par** une exécution dans une machine-outil.

16. Utilisation d'une machine-outil pour l'exécution du procédé selon l'une des revendications précédentes.

17. Utilisation d'une machine-outil selon la revendication 16, **caractérisée en ce que** la machine-outil comporte un support d'outil pivotant.

18. Utilisation d'une machine-outil selon la revendication 16 ou la revendication 17, **caractérisée en ce que** la machine-outil est une machine-outil à plusieurs broches.

19. Utilisation d'une machine-outil selon l'une des revendications 16 à 18, **caractérisée en ce qu'**un support d'outil comporte une pluralité d'outils en fonction d'un nombre de supports de pièce.
